# EUROPÄISCHE PATENTSCHRIFT

(11) **EP 3 230 639 B1**
(45) Veröffentlichungstag und Bekanntmachung des Hinweises auf die Patenterteilung: **19.06.2019**
(21) Anmeldenummer: 15816105.9
(22) Anmeldetag: 08.12.2015
(51) Int. Cl.: F16L 37/08, F16L 29/04

(54) **KUPPLUNGSTEIL FÜR EINE SCHRAUBKUPPLUNG FÜR DRUCKMITTELLEITUNGEN**
COUPLING PART FOR A SCREW COUPLING FOR PRESSURE MEDIUM LINES
ÉLÉMENT DE RACCORDEMENT DESTINÉ À UN RACCORDEMENT À VIS POUR DES CONDUITES DE FLUIDE DE PRESSION

(30) Priorität: 08.12.2014 DE 102014018073
(43) Veröffentlichungstag der Anmeldung: 18.10.2017
(73) Patentinhaber: U.M. Gewerbeimmobilien GmbH & Co. KG, 58791 Werdohl (DE)
(72) Erfinder: LAUFER, Klaus, 58540 Meinerzhagen (DE); WEILAND, Fritz Georg, 58540 Meinerzhagen (DE)
(74) Vertreter: Patentanwälte Dörner & Kötter PartG mbB
(86) Internationale Anmeldenummer: PCT/EP2015/078993
(87) Internationale Veröffentlichungsnummer: WO 2016/091885

(56) Entgegenhaltungen:
- FR-A1- 2 657 142
- US-A- 2 934 359
- US-A1- 2013 125 377

## Beschreibung

Die vorliegende Erfindung betrifft ein Kupplungsteil, insbesondere einen Kupplungsstecker, für eine Schraubkupplung für Druckmittel-, insbesondere Hydraulikleitungen, sowie eine Schraubkupplung mit einem derartigen Kupplungsteil.

Kupplungen für Druckmittelleitungen sind in der Regel entweder als Stecckupplungen oder Schraubkupplungen ausgebildet und gewährleisten ein schnelles Verbinden und Trennen von zwei Druckmittel-, insbesondere Hydraulikleitungen. Sie weisen zwei in Richtung einer Kupplungsachse zusammensteckbare Kupplungsteile, nämlich einen Kupplungsstecker und eine Kupplungsmuffe, auf. Der Kupplungsstecker ist in eine Aufnahmeöffnung der Kupplungsmuffe einsteckbar und mit dieser lösbar verriegelbar. Erfolgt die Verriegelung mittels Verschraubung, z.B. durch eine Verriegelungsmutter, handelt es sich um eine Schraubkupplung. Eine Steckkupplung weist als Verriegelungsmittel z.B. eine Sperrkugelverriegelung auf. Jedes Kupplungsteil weist zudem ein Kupplungsgehäuse auf, innerhalb welchem ein federbelastetes Schließventil angeordnet ist. Im ungekuppelten Zustand sind die Schließventile derart angeordnet, dass sie das jeweilige Kupplungsteil bzw. dessen Strömungskanal verschließen. Beim Zusammenstecken der beiden Kupplungsteile öffnen sich die Schließventile selbsttätig und beim Auskuppeln verschließen die Ventile mittels Federkraft selbsttätig.

Eine derartige Schraubkupplung ist beispielsweise aus der DE 20 2011 004 778 U1 oder der US 2013/125377 bekannt. Diese weist eine Kupplungsmuffe und einen Kupplungsstecker mit einem Steckergehäuse, einem hülsenartigen Schließventil, einem hauben- bzw. becherartigen Stößel und einer Verriegelungsmutter in Form einer Überwurfmutter auf. Die Verriegelungsmutter ist außen um das Steckergehäuse herum angeordnet und mit diesem um eine Kupplungsachse frei drehbar verbunden. Zudem ist die Überwurfmutter axial nur begrenzt verschieblich auf dem Steckergehäuse gelagert. Dazu weist der Kupplungsstecker einen Sicherungsring auf. Zum Verbinden der beiden Kupplungsteile werden diese ineinander gesteckt. Dabei wird die Verriegelungsmutter auf ein Außengewinde der Kupplungsmuffe aufgeschraubt. Problematisch dabei ist, dass sich die Verriegelungsmutter aufgrund von Vibrationen oder Drehmomenten, die über die Hydraulikschläuche, die an eine oder beide Kupplungsteile angeschlossen sind, auf die Kupplungsteile übertragen werden, ungewollt lösen kann. Ein Kupplungsteil, in der Regel die Kupplungsmuffe, ist nämlich üblicherweise fest an die Maschine angeschlossen das zweite Kupplungsteil ist über einen Hydraulikschlauch an das Arbeitsgerät (z.B. Bohrgerät oder Hammer) angeschlossen. Das Arbeitsgerät bewegt sich im Betrieb relativ zur Maschine. Die Hydraulikschläuche sind flexibel genug, um diese Bewegungen zuzulassen, aber auch so starr, dass erhebliche radiale und axiale Kräfte sowie Drehmomente auf die Kuppelstelle übertragen werden können.

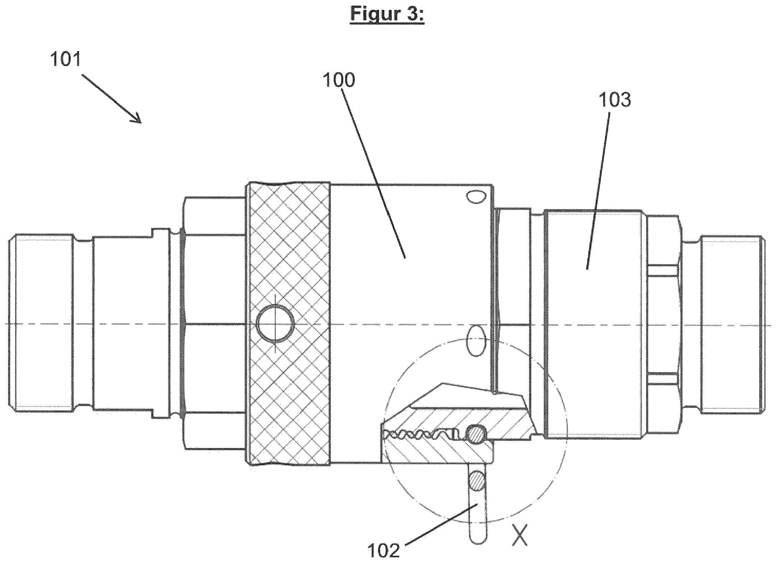

Damit sich die Verriegelungsmutter 100 nicht ungewollt lösen kann, ist es bei einer bekannten Schraubkupplung 101 (Fig. 3) üblich, einen Splint 102 zwischen der Kupplungsmuffe 103 und der Verriegelungsmutter 100 vorzusehen. Dieser ist am kupplungsseitigen Ende der Verriegelungsmutter 100 angeordnet. Der Splint hindert ein Verdrehen der Verriegelungsmutter 100 aber erst, wenn sich die Verriegelungsmutter 100 bereits minimal gedreht hat und er fest an der Nutschulter der Kupplungsmuffe 103 anliegt. Nachteilig dabei ist, dass dann nahezu die gesamte axiale Kraft vom Splint 102 und der Nutschulter aufgenommen wird, weshalb dieser sich in das Material der Verriegelungsmutter 100 und/oder der Kupplungsmuffe 103 einarbeiten kann. Beispielsweise ist es, wie bereits erläutert, möglich, dass auf die angeschlossenen Druckmittelleitungen äußere, teilweise hohe, Kräfte wirken, die diese gegeneinander verdrehen. Sind die Kräfte zu hoch, arbeitet sich der Splint 102 in das Material der Verriegelungsmutter 100 und/oder der Kupplungsmuffe 103 ein, bis die Gewindeflanken wieder in Kontakt kommen und axiale Kräfte aufnehmen können. Dieser Prozess des minimalen Lösens der Verriegelungsmutter 100 mit anschließendem Einarbeiten des Splints 102 kann sich permanent wiederholen und die Kupplung 101 zerstören. Infolgedessen ist der Splint 102 nicht für Anwendungen geeignet, bei denen Vibrationen in Verbindung mit Drehmomenten, die von außen auf ein Kupplungsteil wirken, auftreten.

Aufgabe der vorliegenden Erfindung ist die Bereitstellung eines kostengünstig herstellbaren Kupplungsteils, insbesondere eines Kupplungssteckers, für eine Schraubkupplung für Druckmittelleitungen, insbesondere Hydraulikleitungen, das eine einfache und sichere, dauerhafte Verbindung mit dem jeweils anderen Kupplungsteil, insbesondere einer Kupplungsmuffe, gewährleistet.

Weitere Aufgabe ist die Bereitstellung einer Schraubkupplung mit einem derartigen Kupplungsteil.

Diese Aufgaben werden durch ein Kupplungsteil gemäß Anspruch 1 und eine Schraubkupplung gemäß Anspruch 15 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Eine Seitenansicht, halb geschnitten der erfindungsgemäßen Schraubkupplung mit einer Kupplungsmuffe und einem Kupplungs-stecker im zusammengesteckten bzw. gekuppelten und verriegel-ten Zustand
- Figur 2:: Einen Seitenansicht, halb geschnitten des erfindungsgemäßen Kupplungssteckers im ungekuppelten Zustand
- Figur 3:: Eine teilgeschnittene Seitenansicht einer gekuppelten und verrie-gelten Schraubkupplung gemäß dem Stand der Technik

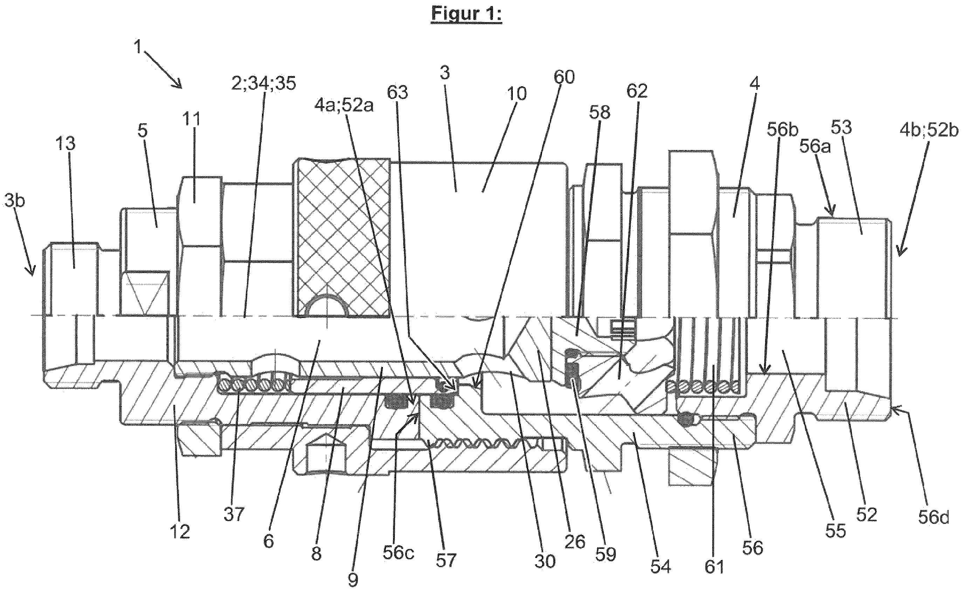

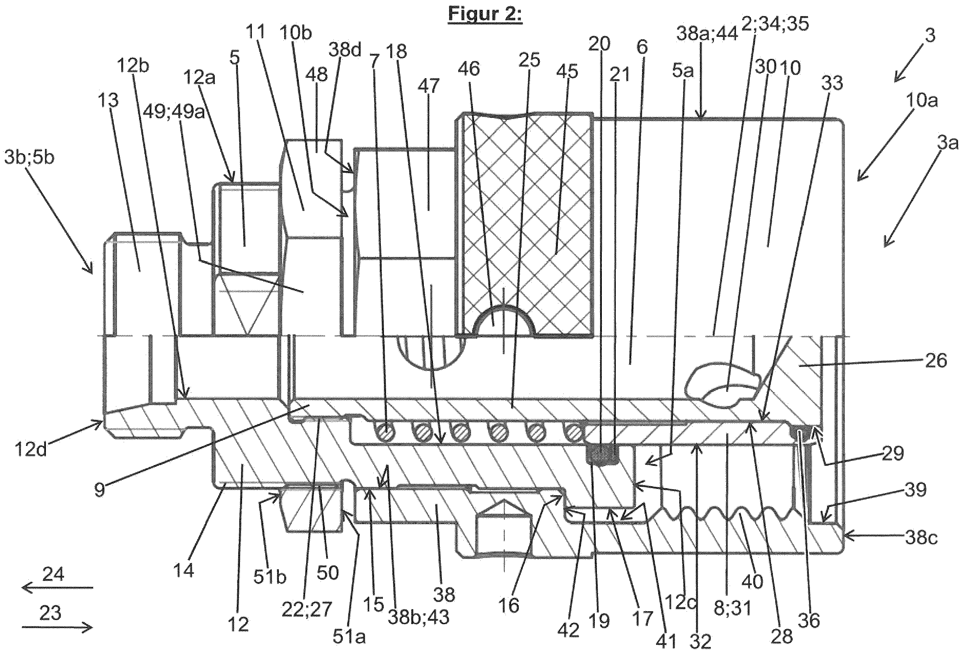

Die erfindungsgemäße Schraubkupplung 1 (Fig. 1 und 2) weist zwei in Richtung einer Kupplungsachse bzw. Steckachse 2 zusammensteckbare zueinander korrespondierende bzw. komplementäre Kupplungsteile 3;4, nämlich einen erfindungsgemäßen Kupplungsstecker 3 und eine Kupplungsmuffe 4, auf. Üblicherweise werden der Kupplungsstecker 3 auf der Seite eines Verbrauchers bzw. Aggregates (Nehmerseite) und die Kupplungsmuffe 4 auf der Seite einer Druckmittel-, insbesondere Hydraulikpumpe, (Geberseite) angeordnet. Bei bestimmten Anwendungen, bei denen (auch) auf der Geberseite ein Restdruck im Hydrauliksystem besteht, kann der Kupplungsstecker 3 auch auf der Geberseite angeordnet werden.

Der erfindungsgemäße Kupplungsstecker 3 und die Kupplungsmuffe 4 weisen jeweils ein Kupplungsende 3a:4a und ein Anschluss- bzw. Leitungsende 3b;4b auf, wobei sich die beiden Enden 3a;3b bzw. 4a;4b des jeweiligen Kupplungsteils 3;4 in Richtung der Kupplungsachse 2 gegenüberliegen. Am Kupplungsende 3a;4a werden Kupplungsstecker 3 und Kupplungsmuffe 4 zusammengesteckt. Am Anschlussende 3b;4b werden der Kupplungsstecker 3 und die Kupplungsmuffe 4 mit der jeweiligen Druckmittelleitung (nicht dargestellt), insbesondere einer Hydraulikleitung, bevorzugt einer Rohrleitung oder einem Schlauch, verbunden.

Die im Folgenden verwendeten Begriffe "axial", "radial" und "in Umfangsrichtung" beziehen sich, soweit nichts Gegenteiliges erwähnt wird, immer auf die Kupplungsachse 2. Die Bezeichnung "kreiszylindrisch" bezieht sich ebenfalls auf die Kupplungsachse 2 als Rotations- bzw. Mittelachse.

Die vorliegende Erfindung betrifft
speziell den Kupplungsstecker 3, weshalb zunächst dieser im Folgenden näher beschrieben wird:
Der erfindungsgemäße Kupplungsstecker 3 (Fig. 1 und 2) weist ein Steckergehäuse 5, einen Durchfluss- bzw. Strömungskanal 6 für das Druckmittel, insbesondere das Hydraulikmedium, eine Ventildichtung mit einer Schließfeder 7 und einem hülsenartigen Steckerschließventil 8, einen becherförmigen Stößel 9, eine Verriegelungshülse, insbesondere eine Verriegelungsmutter 10 und erfindungsgemäß eine Konter- bzw. Gegenmutter 11 zum Kontern der Verriegelungsmutter 10 in ihrer verriegelnden Stellung auf.

Das hülsenartige Steckergehäuse 5 besteht vorzugsweise aus Metall, insbesondere aus Automatenstahl, Vergütungsstahl oder Nitrierstahl. Es weist ein kupplungsseitiges Gehäuseende 5a und ein anschluss- bzw. leitungsseitiges Gehäuseende 5b auf. Zudem weist das Steckergehäuse 5 eine Gehäusewandung 12 mit einer Wandungsaußenfläche 12a und einer Wandungsinnenfläche 12b auf. Die Gehäusewandung 12 weist zudem eine kupplungsseitige Wandungsstirnfläche 12c und eine leitungsseitige Wandungsstirnfläche 12d auf. Am leitungsseitigen Gehäuseende 5b weist das Steckergehäuse 5 einen Anschlussstutzen 13 mit Außengewinde zum Anschluss einer Druckmittelleitung, insbesondere einer Hydraulikleitung, auf. Statt des Außengewindes können selbstverständlich auch andere Anschlüsse wie z.B. Innengewinde- oder Flanschanschlüsse vorhanden sein.

Die Wandungsaußenfläche 12a der Gehäusewandung 12 weist in Richtung der Kupplungsachse 2 vom anschlussseitigen Gehäuseende 5b zum kupplungsseitigen Gehäuseende 5a hin gesehen im Anschluss an den Anschlussstutzen 13 ein Außengewinde 14 zur Aufnahme der Gegenmutter 11 auf. Das Außengewinde 14 weist einen größeren Durchmesser als das Außengewinde des Anschlussstutzens 13 auf. An das Außengewinde 14 schließt sich eine kreiszylindrische Verriegelungsmutterlagerfläche 15 an, die zur drehbaren Lagerung der Verriegelungsmutter 10 um die Kupplungsachse 2 dient. Die Verriegelungsmutterlagerfläche 15 weist vorzugsweise einen Durchmesser auf, der dem Außendurchmesser des Außengewindes 14 entspricht. Die Verriegelungsmutterlagerfläche 15 weist vorzugsweise eine umlaufende, sich radial nach außen erstreckende Ringnut auf, welche zur Reduzierung der Reibung dient. An die Verriegelungsmutterlagerfläche 15 schließt sich eine ringförmige Verriegelungsmutterwiderlagerfläche 16 an, welche bevorzugt senkrecht zur Kupplungsachse 2 ist. Die Verriegelungsmutterwiderlagerfläche 16 erstreckt sich in radialer Richtung gesehen nach außen von der Verriegelungsmutterlagerfläche 15 weg. An die Verriegelungsmutterwiderlagerfläche 16 schließt sich vorzugsweise eine, insbesondere kreiszylindrische, Fläche 17 an, deren Durchmesser größer ist als der Durchmesser der Verriegelungsmutterlagerfläche 15. Diese Fläche 17 schließt sich bevorzugt an die kupplungsseitige Wandungsstirnfläche 12c an.

Die Wandungsinnenfläche 12b der Gehäusewandung 12 weist in an sich bekannter Weise eine kreiszylindrische Ventilführungsfläche 18 auf, welche zur Gleitführung des Steckerschließventils 8 dient. Im Bereich der Ventilführungsfläche 18 ist zudem eine relativ zur Ventilführungsfläche 18 radial nach außen rückspringende Dichtringaufnahmenut 19 vorhanden. In der Dichtringaufnahmenut 19 sind ein erster Ventildichtring 20 und vorzugsweise ein Stützring 21 angeordnet. Die Dichtringaufnahmenut 19 ist am kupplungsseitigen Gehäuseende 5a angeordnet.

Zudem weist die Wandungsinnenfläche 12b der Gehäusewandung 12 ein Innengewinde 22 auf, welches zum Einschrauben des Stößels 9 dient, worauf im Folgenden näher eingegangen wird:
Der becherförmige bzw. haubenartige, an sich bekannte Stößel 9 weist eine rohrförmige Stößelwandung 25 sowie einen Stößelkopf 26 auf. Der Stößelkopf 26 ist an einem kupplungsseitigen Stößelende angeordnet. Die Stößelwandung 25 weist außenseitig von einem anschlussseitigen Stößelende zum kupplungsseitigen Stößelende hin gesehen zunächst ein Außengewinde 27 auf. Daran schließt sich eine kreiszylindrische Ventilführungsfläche 28 an, welche über eine konische, sich radial erweiternde Ventilwiderlagerfläche in eine kreiszylindrische Ventilsitzfläche 29 übergeht. Zudem weist die Stößelwandung 25 mehrere, durchgehende Strömungsöffnungen 30 auf.

Der Stößel 9 ist innerhalb des Steckergehäuses 5 angeordnet und mit diesem fest, also unverschieblich und unverdrehbar verbunden. Dazu ist der Stößel 9 mit seinem Außengewinde 27 in das Innengewinde 22 des Steckergehäuses 5 eingeschraubt. Dabei ragt der Stößel mit seinem anschlussseitigen Stößelende, insbesondere mit seinem Stößelkopf 26 in axialer Richtung aus dem Steckergehäuse 5 heraus. Der Strömungskanal 6 des Kupplungssteckers 3 wird in an sich bekannter Weise teilweise von dem Steckergehäuse 5 und teilweise von dem Stößel 9 begrenzt.

Das an sich bekannte hülsenartige Steckerschließventil 8 weist eine rohrförmige Ventilwandung 31 auf. Außenseitig weist die Ventilwandung 31 eine durchgehende, kreiszylindrische Ventilgleit- und -dichtfläche 32 auf. Innenseitig weist die Ventilwandung 31 von einem anschlussseitigen Ventilende zu einem kupplungsseitigen Ventilende hin gesehen eine kreiszylindrische Ventilgleitfläche 33, eine konische, sich radial erweiternde Ventilanschlagfläche und eine ringförmige, umlaufende Dichtringaufnahmenut auf. In der Dichtringaufnahmenut sind ein zweiter Ventildichtring 36 und vorzugsweise ein zweiter Stützring angeordnet.

Das Steckerschließventil 8 ist um den Stößel 9 herum angeordnet. Dabei ist es mit seiner Ventilgleitfläche 33 in axialer Richtung hin- und her verschieblich auf der Ventilführungsfläche 28 des Stößels 9 gleitbar gelagert. Dabei treibt die Schließfeder 7 das Steckerschließventil 8 in seine geschlossene Stellung in eine zur Kupplungsachse 2 parallele Ventilschließrichtung 23 an. Zum Öffnen wird das Steckerschließventil 8 gegen die Kraft der Schließfeder 7 in eine entgegengesetzte Ventilöffnungsrichtung 24 bewegt. In der geschlossenen Stellung liegt der zweite Ventildichtring 36 dichtend an der Ventilsitzfläche 29 des Stößels 9 an. Der erste Ventildichtring 20 liegt immer an der Ventilgleit- und -dichtfläche 32 gleitbar an. Das Steckerschließventil 8 ist mit der Ventilgleit- und -dichtfläche 32 in axialer Richtung hin- und her verschieblich auf dem Ventildichtring 20 und somit in dem Steckergehäuse 5 gelagert.

Die erfindungsgemäße Verriegelungsmutter 10 besteht ebenfalls vorzugsweise aus Metall, insbesondere aus Automatenstahl oder Nitrierstahl. Zudem weist die Verriegelungsmutter 10 ein kupplungsseitiges Verriegelungsmutterende 10a und ein anschlussseitiges Verriegelungsmutterende 10b auf. Außerdem weist die Verriegelungsmutter 10 eine rohrförmige Verriegelungsmutterwandung 38 mit einer Wandungsaußenfläche 38a und einer Wandungsinnenfläche 38b sowie einer kupplungsseitigen Wandungsstirnfläche 38c und einer anschlussseitigen Wandungsstirnfläche 38d auf.

Die Wandungsinnenfläche 38b der Verriegelungsmutterwandung 38 weist vom kupplungsseitigen Verriegelungsmutterende 10a zum anschlussseitigen Verriegelungsmutterende 10b hin gesehen zunächst vorzugsweise eine kreiszylindrische Fläche 39 auf. An die Fläche 39 schließt sich ein Verriegelungsmutterinnengewinde 40 an. Das zurückgesetzte Verriegelungsmutterinnengewinde 40 ist durch die Fläche 39 gegen Beschädigungen geschützt. Die Verriegelungsmutter 10 weist eine Verriegelungsmuttereinschraubachse 34 auf, welche koaxial zur Kupplungsachse 2 ist. Bei dem Verriegelungsmutterinnengewinde 40 handelt es sich vorzugsweise um ein Rechtsgewinde. Vorzugsweise ist das Verriegelungsmutterinnengewinde 40 zudem ein Rundgewinde. Es kann sich aber auch um einen anderen Gewindetyp, bevorzugt ein metrisches Gewinde oder ein Trapezgewinde handeln.

An das Verriegelungsmutterinnengewinde 40 schließt sich ein Gewindefreistich 41 an. Der Durchmesser des Gewindefreistiches 41 ist größer/gleich dem Kerndurchmesser (Innendurchmesser) des Verriegelungsmutterinnengewindes 40. An den Gewindefreistich 41 schließt sich eine ringförmige Verriegelungsmutteranschlagfläche 42 an, die vorzugsweise senkrecht zur Kupplungsachse 2 ist. Die Verriegelungsmutteranschlagfläche 42 erstreckt sich radial nach innen von dem Gewindefreistich 41 weg. An die Verriegelungsmutteranschlagfläche 42 schließt sich eine kreiszylindrische Verrieglungsmuttergleitfläche 43 an. Der Durchmesser der Verriegelungsmuttergleitfläche 43 ist geringer als der Durchmesser des Gewindefreistiches 41. Die Verriegelungsmuttergleitfläche 43 weist vorzugsweise eine umlaufende, sich radial nach außen erstreckende Ringnut auf, welche zur Reduzierung der Reibung dient. Die Verriegelungsmuttergleitfläche 43 erstreckt sich bis zum anschlussseitigen Verriegelungsmutterende 10b hin und geht an diesem vorzugsweise in die anschlussseitige Wandungsstirnfläche 38d über.

Die Wandungsaußenfläche 38a der Verriegelungsmutterwandung 38 weist vom kupplungsseitigen Verriegelungsmutterende 10a zum anschlussseitigen Verriegelungsmutterende 10b hin gesehen zunächst einen, vorzugsweise kreiszylindrischen, glatten Außenwandungsabschnitt 44 auf. An diesen schließt sich ein gerändelter Außenwandungsabschnitt 45 an. Im Bereich des gerändelten Außenwandungsabschnitts 45 sind vorzugsweise mehrere, sich radial in die Verriegelungsmutterwandung 38 hinein erstreckende Sacklochbohrungen 46 vorhanden, die zum Eingriff eines Montagewerkzeuges dienen. Auch andere Mittel zum Eingriff eines Montagewerkzeuges sind möglich. An den gerändelten Außenwandungsabschnitt 45 schließt sich eine Außensechskantfläche 47 an. Diese erstreckt sich bis zum anschlussseitigen Verriegelungsmutterende 10b hin und geht an diesem vorzugsweise in die anschlussseitige Wandungsstirnfläche 38d über.

Die Verriegelungsmutter 10 ist außenseitig um das Steckergehäuse 5 herum angeordnet und auf diesem in ihrer nicht gekonterten und insbesondere nicht verriegelnden Stellung um die Kupplungsachse 2 frei drehbar gleitgelagert. Dazu ist die Verriegelungsmutter 10 mit ihrer Verriegelungsmuttergleitfläche 43 auf der Verriegelungsmutterlagerfläche 16 des Steckergehäuses 5 frei drehbar gelagert. Die Verriegelungsmutteranschlagfläche 42 der Verriegelungsmutter 10 ist zudem in axialer Richtung fluchtend bzw. benachbart zur Verriegelungsmutterwiderlagerfläche 16 des Steckergehäuses 5 angeordnet. Die Verriegelungsmutterwiderlagerfläche 16 dient deshalb als Widerlager für die Bewegung der Verriegelungsmutter 10 auf dem Steckergehäuse 5 in Ventilschließrichtung 23. In die Ventilöffnungsrichtung 24 wird die Bewegung der Verriegelungsmutter 10 auf dem Steckergehäuse 5 durch die erfindungsgemäße Gegenmutter 11 begrenzt:
Die erfindungsgemäße Gegenmutter 11 besteht ebenfalls vorzugsweise aus Metall, insbesondere aus Automatenstahl oder Nitrierstahl. Zudem weist die Gegenmutter 11 eine ringförmige Gegenmutterwandung 48 mit einem äußeren Antriebsprofil 49, insbesondere einem Außensechskantprofil 49a, zum Antrieb mit einem Werkzeug und/oder zum manuellen Antrieb, sowie mit einem Gegenmutterinnengewinde 50 auf. Das äußere Antriebsprofil 49 kann aber auch anders ausgebildet sein, z.B. kann es zwei Schlüsselflächen aufweisen oder es kann allgemein als Außenmehrkantprofil, z.B. als Außenachtkantprofil ausgebildet sein oder es kann Bohrungen für Hakenschlüssel oder Rändel zur manuellen Betätigung aufweisen. Zudem weist die Gegenmutter 11, insbesondere die Gegenmutterwandung 48, eine kupplungsseitige Gegenmutterstirn- bzw. -anlagefläche 51a und eine anschlussseitige Gegenmutterstirn- bzw. -anlagefläche 51b auf. Die beiden Gegenmutterstirnflächen 51a;b sind vorzugsweise senkrecht zur Kupplungsachse 2.

Besonders bevorzugt ist das Gegenmutterinnengewinde 50 gegenläufig zum Verriegelungsmutterinnengewinde 40 ausgebildet. Das heißt, bei dem Gegenmutterinnengewinde 50 handelt es sich vorzugsweise um ein Linksgewinde. Vorzugsweise weist das Gegenmutterinnengewinde 50 eine geringere Steigung als das Verriegelungsmutterinnengewinde 40 auf. Über die geringere Steigung wird bei gleichem Drehmoment eine stärkere Klemmung der Verriegelungsmutter 10 zwischen dem Steckergehäuse 5 und der Gegenmutter 11 erreicht.

Die Gegenmutter 11 ist ebenfalls außenseitig um das Steckergehäuse 5 herum angeordnet. Mit dem Gegenmutterinnengewinde 50 ist die Gegenmutter 11 auf das dazu komplementäre bzw. korrespondierende Außengewinde 14 der Gehäusewandung 12 aufgeschraubt. Eine Gegenmuttereinschraubachse 35 der Gegenmutter ist dabei koaxial zur Verriegelungsmuttereinschraubachse 34. Die kupplungsseitige Gegenmutterstirnfläche 51a ist dabei in axialer Richtung fluchtend und direkt benachbart zur anschlussseitigen Wandungsstirnfläche 38d der Verriegelungsmutter 10 angeordnet. Dadurch dient die Gegenmutter 11 als Widerlager für die Bewegung der Verriegelungsmutter 10 auf dem Steckergehäuse 5 in Ventilöffnungsrichtung 24. Im ungekuppelten und nicht verriegelten Zustand des Kupplungssteckers 3 ist die kupplungsseitige Gegenmutterstirnfläche 51a aber beabstandet zur anschlussseitigen Wandungsstirnfläche 38d der Verriegelungsmutter 10. Dadurch ist die Verriegelungsmutter 10 in ihrer nicht verriegelnden und nicht gekonterten Stellung frei drehbar.

Bevor nun der Kupplungs- und Verriegelungsvorgang näher erläutert wird, wird kurz die Kupplungsmuffe 4 (Fig. 1) näher erläutert:
Die Kupplungsmuffe 4 weist ein Muffengehäuse 52 auf, welches vorzugsweise aus zwei miteinander fest, aber lösbar verbundenen Muffengehäuseteilen, insbesondere einem Anschlussteil 53 zum Anschluss einer Druckmittelleitung, insbesondere einer Hydraulikleitung, und einem Muffengrundkörper 54 besteht. Zudem weist das Muffengehäuse 52 ein kupplungsseitiges, dem Steckergehäuse 3 zugewandtes Gehäuseende 52a und ein anschluss- bzw. leitungsseitiges Gehäuseende 52b auf. Das Muffengehäuse 52 begrenzt ebenfalls einen Strömungskanal 55. Zudem weist das Muffengehäuse 52 eine Gehäusewandung 56 mit einer Wandungsaußenfläche 56a, einer Wandungsinnenfläche 56b, einer kupplungsseitigen Wandungsstirnfläche 56c und einer anschlussseitigen Wandungsstirnfläche 56d auf. Am kupplungsseitigen Gehäuseende 52a weist die Wandungsaußenfläche 56a ein zum Verriegelungsmutterinnengewinde 40 korrespondierendes Verriegelungsgegengewinde 57 in Form eines Außengewindes auf.

Des Weiteren weist die Kupplungsmuffe 4 ein den Strömungskanal 55 im ungekuppelten Zustand verschließendes, axial verschiebliches, Muffenschließventil 58 auf. Das Muffenschließventil 58 ist beispielsweise zweigeteilt ausgebildet und weist einen, insbesondere gekammerten, Ventildichtring 59 auf, der in einem ungekuppelten Zustand der Kupplungsmuffe 4 dichtend an einer konischen Ventilsitzfläche 60 der Kupplungsmuffe 4 anliegt. Die Ventildichtung der Kupplungsmuffe 4 kann aber auch anderes ausgeführt sein, z.B. als Flachdichtung (nicht dargestellt). Zum Antrieb des Muffenschließventils 58 in dessen schließende Stellung ist eine Schließfeder 61 vorhanden. Zudem weist das Muffenschließventil 58 ebenfalls Strömungsdurchgänge 62 auf.

Beim Zusammenführen, insbesondere Zusammenstecken bzw. Zusammenschrauben, der beiden Kupplungsteile 3;4 parallel zur Kupplungsachse 2 drückt der Stößelkopf 26 das Muffenschließventil 58 in seine geöffnete Stellung, in der es von der Ventilsitzfläche 60 abgehoben ist. Dadurch ist der Strömungskanal 55 der Kupplungsmuffe 4 geöffnet. Der Stößel 9 treibt beim Zusammenkuppeln das Muffenschließventil 58 folglich relativ zum Muffengehäuse 52 derart an, dass der Strömungskanal 55 selbststätig geöffnet wird.

Zudem drückt eine kupplungsseitige Antriebsfläche 63 des Muffengehäuses 52 das Steckerschließventil 8 in seine geöffnete Stellung, in der der zweite Ventildichtring 36 nicht mehr an der Ventilsitzfläche 29 anliegt und die Strömungsöffnungen 30 frei sind. Dadurch ist der Strömungskanal 6 des Kupplungssteckers 3 geöffnet. Das Muffengehäuse 52 treibt beim Zusammenkuppeln das Steckerschließventil 8 folglich relativ zum Steckergehäuse 5 und zum Stößel 9 in Ventilöffnungsrichtung 24 an, dass der Strömungskanal 6 selbsttätig geöffnet wird. Die beiden Strömungskanäle 6;55 werden somit miteinander strömungstechnisch, insbesondere hydraulisch, verbunden.

Das Zusammenschieben der beiden Kupplungsteile 3;4 erfolgt dabei in der Regel mithilfe der Verriegelungsmutter 10. Diese wird zum Zusammenkuppeln mit ihrem Verriegelungsmutterinnengewinde 40 auf das Verriegelungsgegengewinde 57 der Kupplungsmuffe 4 aufgeschraubt. Dabei dreht sich die Verriegelungsmutter 10 frei auf dem Steckergehäuse 5. Durch das Aufschrauben werden die beiden Kupplungsteile 3;4 mittels der beiden Gewinde 40;57 zusammengezogen. Die beiden Kupplungsteile 3;4 werden dabei zusammen gezogen, bis die beiden kupplungsseitigen Wandungsstirnflächen 12c;52c aneinander stoßen. Die Verriegelungsmutteranschlagfläche 42 der Verriegelungsmutter 10 liegt dann an der Verriegelungsmutterwiderlagerfläche 16 des Steckergehäuses 5 an (Fig. 1). Mittels der Verriegelungsmutter 10 sind die beiden Kupplungsteile 3;4 nun in an sich bekannter Weise miteinander lösbar verriegelt.

Um zu verhindern, dass sich diese Verriegelung im Betrieb, z.B. aufgrund von Vibrationen, ungewollt löst, ist die erfindungsgemäße Gegenmutter 11 vorhanden. Diese wird vom anschlussseitigen Gehäuseende 5b des Steckergehäuses 5 soweit auf das Außengewinde 14 aufgeschraubt, bis die kupplungsseitige Gegenmutterstirnfläche 51a an der anschlussseitigen Wandungsstirnfläche 38d der Verriegelungsmutter 10 anliegt. Da das Gegenmutterinnengewinde 50 der Gegenmutter 11 gegenläufig zum Verriegelungsmutterinnengewinde 40 ist, ist die Verriegelungsmutter 10 mittels der Gegenmutter 11 sicher gekontert. Die Verriegelungsmutter 10 kann somit nicht mehr gedreht werden und kann sich im Betrieb nicht mehr ungewollt lösen. Sie ist in ihrer gekonterten Stellung fest, also unverschieblich und unverdrehbar, mit dem Steckergehäuse 5 verbunden. Die Verriegelungsmutter 10 ist zwischen der kupplungsseitigen Gegenmutterstirnfläche 51a und der Verriegelungsmutterwiderlagerfläche 16 des Steckergehäuses 5 klemmend gehalten.

Erst nach dem gezielten Lösen der Gegenmutter 11 kann die Verriegelungsmutter 10 wieder frei gedreht werden und die beiden Kupplungsteile 3;4 voneinander gelöst werden. Werden die beiden Kupplungsteile 3;4 wieder auseinander geschraubt, fahren die beiden Schließventile 8;58 selbsttätig in umgekehrter Richtung, in ihre Ausgangsstellung zurück. Der Antrieb erfolgt automatisch durch die Schließfedern 7;61.

Vorteil der erfindungsgemäßen Gegenmutter 11 ist, dass hohe axiale Kräfte aufgenommen werden können, ohne dass die Bauteile der erfindungsgemäßen Schraubkupplung beschädigt werden bzw. versagen.

Zudem können sich die beiden Kupplungsteile 3;4 bei sehr hohen Drehmomenten in Öffnungsrichtung gegeneinander verdrehen, ohne dass sie dabei beschädigt werden. Denn dadurch, dass sich die Verbindung zwischen Kupplungsstecker 3 und Kupplungsmuffe 4 beim Auftreten äußerer Drehmomente minimal löst, wird die Kupplung nicht durch Torsion belastet. Die Drehbewegung ist in manchen Anwendungen sogar gewünscht.

Das Schlauchende kann sich aber nicht permanent in eine Richtung drehen, weil sich auch das andere Schlauchende nicht permanent dreht, sondern immer nur um einen relativ kleinen Drehwinkel. Deshalb kann sich bei der erfindungsgemäßen Lösung mit Gegenmutter 11 zwar die Verriegelungsmutter 10 geringfügig gegenüber der Kupplungsmuffe 4 drehen, sich aber nicht komplett lösen. Beim Stand der Technik ohne Splint kann sich dagegen die Verriegelungsmutter Stück für Stück um das Steckergehäuse drehen und sich im Extremfall komplett entkuppeln. Beim Stand der Technik mit Splint, kann sich die Verriegelungsmutter immer bis zur festen Anlage des Splintes drehen, und der bereits beschriebene Effekt tritt ein.

Mit der erfindungsgemäßen Lösung ist es zudem auch möglich die beiden Kupplungsteile 3;4 derart zu kuppeln und miteinander zu verriegeln, dass sie in axialer Richtung geringfügig, z.B. um ca. 1 mm voneinander beabstandet sind. Dies ist beispielsweise dann vorteilhaft, wenn bei der jeweiligen Anwendung über die Drehung des Hydraulikschlauches sehr hohe Drehmomente bei geringem Drehwinkel aufgebracht werden. Durch die beabstandete Anordnung wird auch vermieden, dass bei geringer Drehung in Schließrichtung die Kupplungsteile 3;4 oder die Schlauchverbindung durch Torsion beschädigt werden.

Im Rahmen der Erfindung liegt es dabei selbstverständlich auch, dass die Gegenmutter 11 kein gegenläufiges Gewinde aufweist, auch wenn dies bevorzugt ist.

Zudem liegt es im Rahmen der Erfindung, dass anstelle der Gegenmutter 11 eine Gegenschraube (nicht dargestellt) vorhanden ist, welche z.B. als Hohlschraube ausgebildet ist und mit ihrem Gegenschraubenaußengewinde in ein Innengewinde des Kupplungssteckers eingeschraubt wird. Auch in diesem Fall wird die Verriegelungsmutter 10 in ihrer verriegelnden Stellung klemmend zwischen der Gegenschraube und einem gehäusefesten Widerlager gehalten. Die Gegenmutter 11 ist aber bevorzugt.

Auch kann anstelle der bevorzugten Verriegelungsmutter 10 eine Verriegelungshülse mit Verriegelungshülseninnengewinde vorhanden sein. Die Verriegelungshülse wird dann mit einem korrespondierenden Außengewinde als Verriegelungsgegengewinde beim Kuppeln verschraubt.

Zudem sind erfindungsgemäß andere Mittel denkbar, mittels denen die Verriegelungsmutter in ihrer verriegelnden Stellung fest, also unverschieblich und unverdrehbar, direkt mit dem Steckergehäuse 5, bevorzugt klemmend bzw. mittels Klemmung, verbindbar ist. Diese Mittel sind dabei Teil des Kupplungssteckers, nicht der Kupplungsmuffe. Bzw. die Verbindung besteht direkt zwischen dem Kupplungsstecker und der Verriegelungshülse ohne Zwischenschaltung der Kupplungsmuffe.

## Patentansprüche

1. Kupplungsteil (3), insbesondere Kupplungsstecker (3), für eine Schraubkupplung (1) für Druckmittelleitungen, insbesondere Hydraulikleitungen, zum Kuppeln mit einem korrespondierenden Kupplungsteil (4), insbesondere einer Kupplungsmuffe (4), in Richtung einer Kupplungsachse (2), aufweisend ein hülsenartiges Kupplungsgehäuse (5) und eine Verriegelungshülse, insbesondere Verriegelungsmutter (10), zum Verriegeln des Kupplungsteils (3) mit dem korrespondierenden Kupplungsteil (4) in der gekuppelten Stellung, wobei die Verriegelungshülse, insbesondere die Verriegelungsmutter (10), ein Verriegelungshülsengewinde, insbesondere ein Verriegelungsmutterinnengewinde (40), zum Verschrauben mit einem Verriegelungsgegengewinde (57) des korrespondierenden Kupplungsteils (4), aufweist und wobei die Verriegelungshülse, insbesondere die Verriegelungsmutter (10), in ihrer nicht verriegelnden Stellung auf dem Gehäuse (5) um die Kupplungsachse (2) frei drehbar gelagert ist, wobei das Kupplungsteil (3) Mittel aufweist, mittels denen die Verriegelungsmutter (10) in ihrer verriegelnden Stellung in axialer Richtung unverschieblich und unverdrehbar mit dem Gehäuse (5), bevorzugt klemmend, verbindbar ist,
**dadurch gekennzeichnet,**
**dass** das Kupplungsteil (3) eine auf das Gehäuse (5) aufgeschraubte Gegenmutter (11) oder Gegenschraube zum Kontern der Verriegelungshülse, insbesondere der Verriegelungsmutter (10), in ihrer verriegelnden Stellung aufweist.

2. Kupplungsteil (3) nach Anspruch 1,
**dadurch gekennzeichnet, dass**
die Verriegelungshülse, insbesondere die Verriegelungsmutter (10), in ihrer gekonterten Stellung mittels der Gegenmutter (11) oder der Gegenschraube derart gekontert wird, dass die Verriegelungshülse, insbesondere die Verriegelungsmutter (10), in axialer Richtung unverschieblich und unverdrehbar mit dem Gehäuse (5) verbunden ist.

3. Kupplungsteil (3) nach Anspruch 1 oder 2,
**dadurch gekennzeichnet, dass**
die Gegenmutter (11) ein Gegenmutterinnengewinde (50) aufweist oder die Gegenschraube ein Gegenschraubenaußengewinde aufweist, wobei das Gegenmutterinnengewinde (50) bzw. das Gegenschraubenaußengewinde vorzugsweise gegenläufig zum Verriegelungshülsengewinde, insbesondere zum Verriegelungsmutterinnengewinde (40), der Verriegelungsmutter (10), ist, oder dass die Gegenmutter (11) ein Gegenmutterinnengewinde (50) aufweist, welches vorzugsweise gegenläufig zum Verriegelungsgewinde der Verriegelungshülse, insbesondere zum Verriegelungsmutterinnengewinde (40) der Verriegelungsmutter (10), ist, bevorzugt, dass das Gegenmutterinnengewinde (50) bzw. das Gegenschraubenaußengewinde eine geringere Steigung als das Verriegelungshülsengewinde der Verriegelungshülse, insbesondere als das Verriegelungsmutterinnengewinde (40), aufweist.

4. Kupplungsteil (3) nach einem der Ansprüche 1 bis 3,
**dadurch gekennzeichnet, dass**
eine Verriegelungsmuttereinschraubachse (34) der Verriegelungsmutter (10) und eine Gegenmuttereinschraubachse (35) der Gegenmutter (11) zueinander koaxial und bevorzugt koaxial zur Kupplungsachse (2) sind.

5. Kupplungsteil (3) nach einem der vorhergehenden Ansprüche,
**dadurch gekennzeichnet, dass**
das Kupplungsteil (3) ein Kupplungsende (3a) und ein Anschluss- bzw. Leitungsende (3b) aufweist und vorzugsweise das Kupplungsgehäuse (5) ein kupplungsseitiges Gehäuseende (5a) und ein anschlussseitiges Gehäuseende (5b) aufweist.

6. Kupplungsteil (3) nach einem der Ansprüche 1 bis 5,
**dadurch gekennzeichnet, dass**
die Verriegelungshülse, insbesondere die Verriegelungsmutter (10), in ihrer gekonterten Stellung zwischen der Gegenmutter (11) oder der Gegenschraube und einem mit dem Gehäuse (5) verbundenen bzw. gehäusefesten Widerlager (16) klemmend gehalten wird.

7. Kupplungsteil (3) nach einem der Ansprüche 1 bis 6,
**dadurch gekennzeichnet, dass**
die Gegenmutter (11) in axialer Richtung benachbart zur Verriegelungsmutter (10), insbesondere benachbart zu einem anschlussseitigen Verriegelungsmutterende (10b) der Verriegelungsmutter (10), angeordnet ist.

8. Kupplungsteil (3) nach einem der Ansprüche 5 bis 7,
**dadurch gekennzeichnet, dass**
das Kupplungsgehäuse (5) eine Gehäusewandung (12) mit einer Wandungsaußenfläche (12a), einer Wandungsinnenfläche (12b), einer kupplungsseitigen Wandungsstirnfläche (12c) und einer anschlussseitigen Wandungsstirnfläche (12d) aufweist.

9. Kupplungsteil (3) nach Anspruch 8 **dadurch gekennzeichnet, dass**
die Wandungsaußenfläche (12a) ein Außengewinde (14), auf welches die Gegenmutter (11) aufgeschraubt ist, und eine kreiszylindrische Verriegelungsmutterlagerfläche (15), auf der die Verriegelungsmutter (10) gleitgelagert ist, aufweist, wobei das Außengewinde (14) und die kreiszylindrische Verriegelungsmutterlagerfläche (15) in axialer Richtung zueinander benachbart angeordnet sind und vorzugsweise das Außengewinde (14) in Bezug zur Verriegelungsmutterlagerfläche (15) anschlussseitig angeordnet ist, bevorzugt dass sich axial gegenüberliegend zum Außengewinde (14) an die Verriegelungsmutterlagerfläche (15) eine ringförmige Verriegelungsmutterwiderlagerfläche (16) anschließt, welche bevorzugt senkrecht zur Kupplungsachse (2) ist, wobei sich die Verriegelungsmutterwiderlagerfläche (16) in radialer Richtung gesehen nach außen von der Verriegelungsmutterlagerfläche (15) weg erstreckt.

10. Kupplungsteil (3) nach einem der Ansprüche 5 bis 9,
**dadurch gekennzeichnet, dass**
die Verriegelungsmutter (10) eine rohrförmige Verriegelungsmutterwandung (38) mit einer Wandungsaußenfläche (38a), einer Wandungsinnenfläche (38b) sowie einer kupplungsseitigen Wandungsstirnfläche (38c) und einer anschlussseitigen Wandungsstirnfläche (38d) aufweist, bevorzugt dass die Wandungsinnenfläche (38b) der Verriegelungsmutterwandung (38) vom kupplungsseitigen Verriegelungsmutterende (10a) zu einem anschlussseitigen Verriegelungsmutterende (10b) hin gesehen nacheinander angeordnet das Verriegelungsmutterinnengewinde (40), eine ringförmige Verriegelungsmutteranschlagfläche (42) und eine kreiszylindrische Verrieglungsmuttergleitfläche (43) aufweist.

11. Kupplungsteil (3) nach Anspruch 10 **dadurch gekennzeichnet, dass**
die Verriegelungshülse, insbesondere die Verriegelungsmutter (10), außenseitig um das Gehäuse (5) herum angeordnet ist und auf diesem in ihrer nicht gekonterten Stellung um die Kupplungsachse (2) frei drehbar gleitgelagert ist, bevorzugt dass die Verriegelungsmutter (10) in ihrer nicht gekonterten Stellung mit ihrer Verriegelungsmuttergleitfläche (43) auf der Verriegelungsmutterlagerfläche (15) des Kupplungsgehäuses (5) frei drehbar gelagert ist.

12. Kupplungsteil (3) nach Anspruch 11,
**dadurch gekennzeichnet, dass**
die Verriegelungsmutteranschlagfläche (42) der Verriegelungsmutter (10) in axialer Richtung benachbart zur Verriegelungsmutterwiderlagerfläche (16) des Kupplungsgehäuses (5) angeordnet ist, so dass die Verriegelungsmutter (10) in axialer Richtung zwischen der Verriegelungsmutterwiderlagerfläche (16) des Kupplungsgehäuses (5) und der Gegenmutter (11) angeordnet ist, bevorzugt dass die Verriegelungsmutter (10) in ihrer gekonterten Stellung zwischen der Verriegelungsmutterwiderlagerfläche (16) des Kupplungsgehäuses (5) und der Gegenmutter (11) klemmend gehalten wird.

13. Kupplungsteil (3) nach einem der vorhergehenden Ansprüche,
**dadurch gekennzeichnet, dass**
das Kupplungsteil (3) eine Ventildichtung mit einem innerhalb des Strömungskanals (6) in axialer Richtung hin und her verschieblich angeordneten Schließventil (7) zum Verschließen des Strömungskanals (6) im ungekuppelten Zustand des Kupplungsteils (3) aufweist.

14. Kupplungsteil (3) nach einem der vorhergehenden Ansprüche,
**dadurch gekennzeichnet, dass**
das Kupplungsteil (3) ein Kupplungsstecker (3) ist.

15. Schraubkupplung (1) für Druckmittel-, insbesondere Hydraulikleitungen, aufweisend zwei miteinander lösbar verriegelbare Kupplungsteile (3;4), insbesondere eine Kupplungsmuffe (4) und einen Kupplungsstecker (3), **dadurch gekennzeichnet, dass**
das eine Kupplungsteil (3) gemäß einem der vorhergehenden Ansprüche ausgebildet ist und das andere Kupplungsteil (4) das Verriegelungsgegengewinde (57) aufweist.

16. Schraubkupplung (1) nach Anspruch 15,
**dadurch gekennzeichnet, dass**
in einer gekuppelten und verriegelten Stellung der beiden Kupplungsteile (3;4) die Verriegelungshülse mit ihrem Verriegelungsgewinde mit dem Verriegelungsgegengewinde (57) verschraubt ist, insbesondere die Verriegelungsmutter (10) mit ihrem Verriegelungsmutterinnengewinde (40) auf das Verriegelungsgegengewinde (57) aufgeschraubt ist, und/oder dass die Kupplungsteile (3;4) jeweils ein Kupplungsgehäuse (5;52) mit einem Strömungskanal (6;55) und ein innerhalb des Strömungskanals (6;55) angeordnetes Schließventil (7;58) zum Verschließen des Strömungskanals (6;55) im ungekuppelten Zustand der Kupplung (1) aufweisen, wobei vorzugsweise die beiden Schließventile (7;58) beim Kuppeln der beiden Kuppplungsteile (3;4) selbsttätig geöffnet werden.

## Claims

1. Coupling part (3), in particular a coupling plug (3), for a screw coupling (1) for pressure medium lines, in particular hydraulic lines, for coupling with a corresponding coupling part (4), in particular a coupling socket (4), in the direction of a coupling axis (2), having a sleeve-like coupling housing (5) and a locking sleeve, in particular a locking nut (10), for locking the coupling part (3) with the corresponding coupling part (4) in the coupled position, wherein the locking sleeve, in particular the locking nut (10), has a locking sleeve thread, in particular a locking nut internal thread (40), for screwing with a mating locking thread (57) of the corresponding coupling part (4) and wherein the locking sleeve, in particular the locking nut (10), is mounted so as to be freely rotatable on the housing (5) about the coupling axis (2) in its non-locking position, wherein the coupling part (3) has means, by way of which the locking nut (10) in its locking position can be connected to the housing, preferably in a clamped manner, so as to be non-displaceable and non-rotatable in an axial direction, **characterised in that** the coupling part (3) has a counter nut (11) or counter screw screwed onto the housing (5) for locking the locking sleeve, in particular the locking nut (10), in its locking position.

2. Coupling part (3) according to claim 1, **characterised in that** the locking sleeve, in particular the locking nut (10), in its locked position is tightened by means of the counter nut (11) or the counter screw in such a manner that the locking sleeve, in particular the locking nut (10), is connected to the housing (5) so as to be non-displaceable and non-rotatable in an axial direction.

3. Coupling part (3) according to claim 1 or 2, **characterised in that** the counter nut (11) has a counter nut internal thread (50) or the counter screw has a counter screw external thread, wherein the counter nut internal thread (50) or the counter screw external thread preferably runs oppositely to the locking sleeve thread, in particular to the locking nut internal thread (40) of the locking nut (10) or that the counter nut (11) has a counter nut internal thread (50), which runs preferably oppositely to the locking thread of the locking sleeve, in particular to the locking nut internal thread (40) of the locking nut (10), preferably, that the counter nut internal thread (50) or the counter screw external thread has a smaller pitch than the locking sleeve thread of the locking sleeve, in particular than the locking nut internal thread (40).

4. Coupling part (3) according to one of claims 1 to 3, **characterised in that** a locking nut screwing-in axis (34) of the locking nut (10) and a counter nut screwing-in axis (35) of the counter nut (11) are coaxial with each other and preferably coaxial with the coupling axis (2).

5. Coupling part (3) according to one of the previous claims, **characterised in that** the coupling part (3) has a coupling end (3a) and a connection end or line end (3b) and preferably the coupling housing (5) has a housing end (5a) on the coupling side and a housing end (5b) on the connection side.

6. Coupling part (3) according to one of claims 1 to 5, **characterised in that** the locking sleeve, in particular the locking nut (10), in its locked position between the counter nut (11) or the counter screw and a counter bearing (16) connected or fixed to the housing (5), is held in a clamped manner.

7. Coupling part (3) according to one of claims 1 to 6, **characterised in that** the counter nut (11) is arranged adjacent to the locking nut (10) in an axial direction, particularly adjacent to a locking nut end (10b) of the locking nut (10) on the connection side.

8. Coupling part (3) according to one of claims 5 to 7, **characterised in that** the coupling housing (5) has a housing wall (12) with an outer wall surface (12a), an inner wall surface (12b), a wall end face (12c) on the coupling side and a wall end face (12d) on the connection side.

9. Coupling part (3) according to claim 8, **characterised in that** the outer wall surface (12a) has an external thread (14), on which the counter nut (11) is screwed, and a circular-cylindrical locking nut bearing surface (15), on which the locking nut (10) is slidingly mounted, wherein the external thread (14) and the circular-cylindrical locking nut bearing surface (15) are arranged adjacent in an axial direction relative to one another and preferably the external thread (14) is arranged on the connection side in relation to the locking nut bearing surface (15), preferably that the locking nut bearing surface (15) is followed by an annular locking nut counter bearing surface (16), axially opposed to the external thread (14), which is preferably perpendicular to the coupling axis (2), wherein the locking nut counter bearing surface (16) extends outwardly away from the locking nut bearing surface (15), as seen in the radial direction.

10. Coupling part (3) according to one of claims 5 to 9, **characterised in that** the locking nut (10) has a tubular locking nut wall (38) with an outer wall surface (38a), an inner wall surface (38b) as well as a wall end surface (38c) on the coupling side and a wall end face (38d) on the connection side, preferably that the inner wall surface (38b) of the locking nut wall (38), as seen from the locking nut end (10a) on the coupling side to a locking nut end (10b) on the connection side, has the locking nut internal thread (40), an annular locking nut stop surface (42) and a circular-cylindrical locking nut sliding surface (43) arranged in succession.

11. Coupling part (3) according to claim 10, **characterised in that** the locking sleeve, in particular the locking nut (10) is arranged externally around the housing (5) and is slidably mounted in its non-locked position so as to be freely rotatable about the coupling axis (2), preferably that the locking nut (10) in its non-locked position is mounted with its locking nut sliding surface (43) on the locking nut bearing surface (15) of the coupling housing (5) in a freely rotatable manner.

12. Coupling part (3) according to claim 11, **characterised in that** the locking nut stop surface (42) of the locking nut (10) is arranged adjacent to the locking nut counter bearing surface (16) of the coupling housing (5) in an axial direction, so that the locking nut (10) is arranged in an axial direction between the locking nut counter bearing surface (16) of the coupling housing (5) and the counter nut (11), preferably that the locking nut (10) in its locked position is held in a clamped manner between the locking nut counter bearing surface (16) of the coupling housing (5) and the counter nut (11).

13. Coupling part (3) according to one of the previous claims, **characterised in that** the coupling part (3) has a valve seal with a stop valve (7) arranged so as to be bidirectionally displaceable in an axial direction within the flow channel (6) for locking the flow channel (6) in the uncoupled state of the coupling part (3).

14. Coupling part (3) according to one of the previous claims, **characterised in that** the coupling part (3) is a coupling plug (3).

15. Screw coupling (1) for pressure medium lines, in particular hydraulic lines having two coupling parts (3;4) which can be detachably locked together, particularly a coupling socket (4) and a coupling plug (3), **characterised in that** the one coupling part (3) is designed according to one of the previous claims and the other coupling part (4) has the mating locking thread (57).

16. Screw coupling (1) according to claim 15, **characterised in that** in a coupled and locked position of the two coupling parts (3;4), the locking sleeve with its locking thread is screwed to the mating locking thread (57), in particular the locking nut (10) is screwed with its locking nut internal thread (40) on the mating locking thread (57) and/or that the coupling parts (3;4) respectively have a coupling housing (5;52) with a flow channel (6;55) and a stop valve (7;58) arranged inside the flow channel (6;55) for locking the flow channel (6;55) in the uncoupled state of the coupling (1), wherein preferably the two stop valves (7;58) can be automatically opened when the two coupling parts (3;4) are coupled.

## Revendications

1. Élément (3) de raccord, notamment connecteur (3) de raccord, pour un raccord à visser (1) destiné à des conduites de fluide sous pression, notamment à des conduites hydrauliques, à coupler avec un élément (4) de raccord lui correspondant, en particulier à un manchon (4) de raccord, dans la direction d'un axe (2) de raccord, présentant un boîtier (5) de raccord en forme de douille et une douille de verrouillage, notamment un écrou (10) servant à verrouiller l'élément (3) de raccord avec l'élément (4) de raccord correspondant en position couplée, sachant que la douille de verrouillage, notamment l'écrou de verrouillage (10), présente un filetage de douille de verrouillage, en particulier un filetage intérieur (40) d'écrou de verrouillage à visser contre un filetage antagoniste de verrouillage (57) que présente l'élément de raccord (4) correspondant et sachant que la douille de verrouillage, notamment l'écrou de verrouillage (10), se trouve, sur sa position non verrouillante sur le boîtier (5), en appui lui permettant de tourner librement autour de l'axe (2) de raccord, sachant que l'élément (3) de raccord présente des moyens permettant de relier l'écrou de verrouillage (10), sur sa position verrouillante, de manière non tournante et non coulissante en direction axiale, de préférence par bridage, avec le boîtier (5), **caractérisé en ce que** l'élément (3) de raccord présente un contre-écrou (11) ou une contre-vis vissé(e) sur le boîtier (5) et servant à contrer la douille de verrouillage, notamment l'écrou de verrouillage (10) sur sa position verrouillante.

2. Élément (3) de raccord selon la revendication 1, **caractérisé en ce que** la douille de verrouillage, notamment l'écrou de verrouillage (10), est contré(e) dans sa position contrée au moyen du contre-écrou (11) ou de la contre-vis de telle manière que la douille de verrouillage, notamment l'écrou de verrouillage (10) est relié(e) au boîtier (5) sans pouvoir ni tourner ni se déplacer dans le sens axial.

3. Élément (3) de raccord selon la revendication 1 ou 2, **caractérisé en ce que** le contre-écrou (11) présente un filetage intérieur (50) ou que la contre-vis présente un filetage extérieur, sachant que le filetage intérieur (50) du contre-écrou respectivement le filetage extérieur de la contre-vis présentent un pas de préférence contraire à celui du filetage de la douille de verrouillage, notamment au filetage intérieur (40) de l'écrou de verrouillage (10), ou sachant que le contre-écrou (11) présente un filetage intérieur (50) dont le pas est de préférence contraire au filetage de verrouillage de la douille de verrouillage, en particulier au filetage intérieur (40) de l'écrou de verrouillage (10), sachant de préférence que le filetage intérieur (50) du contre-écrou respectivement le filetage extérieur de la contre-vis présentent un plus faible pas que le filetage de la douille de verrouillage, notamment plus faible que le filetage intérieur (40) de l'écrou de verrouillage.

4. Élément (3) de raccord selon l'une des revendications 1 à 3, **caractérisé en ce qu'**un axe à visser (34) de l'écrou de verrouillage (10) et un axe à visser (35) du contre-écrou (11) sont réciproquement coaxiaux et de préférence coaxiaux à l'axe (2) de raccord.

5. Élément (3) de raccord selon l'une des revendications précédentes, **caractérisé en ce que** l'élément (3) de raccord présente une extrémité (3a) de raccord et une extrémité de raccordement ou extrémité de conduite (3b) et que de préférence le boîtier (5) de raccord présente une extrémité (5a) de boîtier du côté du raccord et une extrémité (5b) de boîtier du côté du raccordement.

6. Élément (3) de raccord selon l'une des revendications 1 à 5, **caractérisé en ce que** la douille de verrouillage, notamment l'écrou de verrouillage (10), est maintenu de manière bridante sur sa position contrée entre le contre-écrou (11) ou la contre-vis et un palier antagoniste (16) relié au boîtier (5) ou solidaire du boîtier.

7. Élément (3) de raccord selon l'une des revendications 1 à 6, **caractérisé en ce que** le contre-écrou (11) est disposé dans le sens axial au voisinage de l'écrou de verrouillage (10), notamment au voisinage d'une extrémité de l'écrou de verrouillage (10) sur le côté de raccordement.

8. Élément (3) de raccord selon l'une des revendications 5 à 7, **caractérisé en ce que** le boîtier (5) de raccord présente une paroi (12) composée d'une surface extérieure (12a) de paroi, d'une surface intérieure (12b) de paroi, d'une surface frontale (12c) de paroi côté raccord et d'une surface frontale (12d) côté raccordement.

9. Élément (3) de raccord selon la revendication 8, **caractérisé en ce que** la surface extérieure (12a) de paroi présente un filetage extérieur (14) sur lequel est vissé le contre-écrou (11), et une surface d'appui (15) cylindrique sur laquelle l'écrou de verrouillage (10) est en appui glissant, sachant que le filetage extérieur (14) et la surface d'appui (15) cylindrique de l'écrou de verrouillage sont disposés au voisinage l'un de l'autre dans le sens axial et que de préférence le filetage extérieur (14) est disposé côté raccordement relativement à la surface d'appui (15) de l'écrou de verrouillage, de préférence **en ce qu'**axialement en face du filetage extérieur (14) se raccorde à la surface d'appui (15) de l'écrou de verrouillage une surface d'appui antagoniste (16) annulaire pour l'écrou de verrouillage, surface qui se trouve de préférence à la verticale de l'axe (2) de raccord, sachant que la surface d'appui antagoniste (16) de l'écrou de verrouillage observée en direction radiale s'étend vers l'extérieur en s'éloignant de la surface d'appui (15) de l'écrou de verrouillage.

10. Élément (3) de raccord selon l'une des revendications 5 à 9, **caractérisé en ce que** l'écrou de verrouillage (10) présente une paroi (38) tubulaire composée d'une surface extérieure (38a) de paroi, d'une surface intérieure (38b) de paroi ainsi que d'une surface frontale (38c) de paroi côté raccord et d'une surface frontale (38d) de paroi côté raccordement, de préférence **en ce que** la surface intérieure (38b) de la paroi (38) de l'écrou de verrouillage - observée de l'extrémité (10a) de l'écrou de verrouillage côté raccord en direction de l'extrémité (10b) de l'écrou de verrouillage côté raccordement - présente, successivement disposés, le filetage intérieur (40) de l'écrou de verrouillage, une surface butée (42) annulaire de l'écrou de verrouillage et une surface de glissement (43) cylindrique de l'écrou de verrouillage.

11. Élément (3) de raccord selon la revendication 10, **caractérisé en ce que** la douille de verrouillage, notamment l'écrou de verrouillage (10), est disposée du côté extérieur autour du boîtier (5) et que sur ce dernier elle se trouve en appui glissant, lorsqu'elle n'est pas en position contrée, lui permettant de tourner librement autour de l'axe (2) de raccord, de préférence **en ce que** l'écrou de verrouillage (10) sur sa position non contrée est en appui par sa surface de glissement (43) sur la surface d'appui (15), pour l'écrou de verrouillage, du boîtier (5) du raccord, ce qui lui permet de tourner librement.

12. Élément (3) de raccord selon la revendication 11, **caractérisé en ce que** la surface butée (42) de l'écrou de verrouillage (10) est disposée dans le sens axial au voisinage de la surface d'appui antagoniste (16), pour l'écrou de verrouillage, du boîtier (5) du raccord, de sorte que l'écrou de verrouillage (10) est disposé dans le sens axial entre la surface d'appui antagoniste (16), pour l'écrou de verrouillage, du boîtier (5) du raccord et du contre-écrou (11), de préférence **en ce que** l'écrou de verrouillage (10) sur sa position contrée est maintenu de manière bridante entre la surface d'appui antagoniste (16), pour l'écrou de verrouillage, du boîtier (5) du raccord et le contre-écrou (11).

13. Élément (3) de raccord selon l'une des revendications précédentes, **caractérisé en ce que** l'élément (3) de raccord présente un joint de vanne avec une vanne obturatrice (7) disposée déplaçable en va-et-vient dans le sens axial à l'intérieur du conduit d'écoulement (6), vanne qui est destinée à obturer le conduit d'écoulement (6) lorsque l'élément (3) de raccord se trouve à l'état découplé.

14. Élément (3) de raccord selon l'une des revendications précédentes, **caractérisé en ce que** l'élément (3) de raccord est un connecteur (3) de raccord.

15. Raccord à vis (1) pour conduites de fluide sous pression, notamment pour des conduites hydrauliques, présentant deux éléments (3 ; 4) de raccord verrouillables détachables, notamment un manchon (4) de raccord et un connecteur (3) de raccord, **caractérisé en ce qu'**un élément (3) de raccord est configuré conformément à l'une des revendications précédentes et **en ce que** l'autre élément (4) de raccord présente le filetage antagoniste (57) de verrouillage.

16. Raccord à visser (1) selon la revendication 15, **caractérisé en ce que** dans une position couplée et verrouillée des deux éléments (3 ; 4) de raccord la douille de verrouillage est vissée par son filetage de verrouillage avec le filetage antagoniste (57) de verrouillage, notamment **en ce que** l'écrou de verrouillage (10) est vissé par son filetage intérieur (40) sur le filetage antagoniste (57) de verrouillage, et/ou **en ce que** les éléments (3 ; 4) de raccord présentent chacun un boîtier (5 ; 52) de raccord avec un conduit d'écoulement (6 ; 55) et une vanne obturatrice (7 ; 58) disposée à l'intérieur du conduit d'écoulement (6 ; 55), pour obturer le conduit d'écoulement (6 ; 55) lorsque le raccord (1) se trouve à l'état découplé, sachant que de préférence les deux vannes obturatrices (7 ; 58) s'ouvrent automatiquement lors de l'accouplement des deux éléments (3 ; 4) de raccord.
